# EUROPÄISCHE PATENTSCHRIFT

(11) **EP 3 733 817 B1**
(45) Veröffentlichungstag und Bekanntmachung des Hinweises auf die Patenterteilung: **16.11.2022**
(21) Anmeldenummer: 19171887.3
(22) Anmeldetag: 30.04.2019
(51) Int. Cl.: C09K 21/02, C09K 21/04, C11C 5/00, F21V 37/00

(54) **BORFREIE TRÄNKLÖSUNG FÜR EINEN DOCHT UND BORFREIER DOCHT**
BORON-FREE TREATMENT SOLUTION FOR A WICK AND BORON-FREE WICK
SOLUTION D'IMPRÉGNATION EXEMPT DE BORE POUR UNE MÈCHE ET MÈCHE EXEMPTE DE BORE

(43) Veröffentlichungstag der Anmeldung: 04.11.2020
(73) Patentinhaber: Schreiber GmbH, 36043 Fulda (DE)
(72) Erfinder: STAUBACH, Carsten, 36043 Fulda (DE); STAUBACH, Lukas, 36043 Fulda (DE); STAUBACH, Norbert, 36043 Fulda (DE)
(74) Vertreter: Aera A/S

(56) Entgegenhaltungen:
- WO-A1-96/00763
- CN-A- 101 880 204
- CN-A- 104 327 862
- CN-A- 105 541 434
- CN-A- 107 937 145
- CN-B- 101 451 091
- US-A- 3 940 233
- US-A1- 2010 239 642
- US-B1- 9 920 250

## Beschreibung

Die vorliegende Erfindung betrifft eine borfreie Tränklösung für einen Docht, einen borfreien Docht sowie eine Kerze, die einen erfindungsgemäßen Docht umfasst. Weiterhin betrifft die Erfindung ein Verfahren zur Imprägnierung eines Dochts mit einer Tränklösung.

Dochte für Kerzen müssen verschiedene Eigenschaften in sich vereinen. Einerseits müssen Sie ein gutes Abbrennverhalten zeigen, wobei sie jedoch nicht zu schnell verglühen dürfen. Andererseits muss der Krümmungswinkel des Dochtes in einem vorgegebenen Bereich liegen, um entsprechende Flammengrößen und -formen hervorzurufen.

Um diese Eigenschaften zu erreichen, werden den Dochten verschiedene Substanzen zugefügt, die Einfluss auf das Abbrennverhalten haben. Ein wichtiger Bestandteil ist hierbei ein Flammschutzmittel, welches ein zu schnelles Abbrennen verhindert. Weiterhin werden Substanzen verwendet, die die weiteren Eigenschaften des Dochtes beeinflussen. Wichtig ist vorliegend das Zusammenspiel aller Komponenten, um einen Docht zu erhalten, der eine entsprechende Krümmung und ein vorteilhaftes Abbrennverhalten aufweist.

Aus dem Stand der Technik sind Bor-enthaltende Substanzen wie Borsäure, Borate oder auch Borax bekannt, welche als Flammschutzmittel eingesetzt werden. Diese Substanzen rufen ein vorteilhaftes Abbrennverhalten des Dochtes hervor. Ebenso hat der Docht eine vorteilhafte Krümmung.

Borate und insbesondere Borax können negativen Einfluss auf die Gesundheit haben und werden als fortpflanzungsgefährdend eingestuft. Das heißt Dochte, die mit solchen Substanzen imprägniert, das heißt getränkt wurden, sind gegenwärtig nicht mehr wünschenswert. WO96/00763A1 offenbart borfreie Tränklösungen umfassend Wasser, Diammoniumphosphat und Monoammoniumphosphat , Magnesiumsulfat und Ammoniumsulfat und verschiedene Additive (Ammoniumacetat, Magnesiumacetat).

Es ist daher von Interesse Präparationslösungen, auch als Tränklösungen bezeichnet, für Dochte bereitzustellen, die gesundheitlich unbedenklich sind und trotzdem die vorteilhaften Abbrenn- und Krümmungseigenschaften von herkömmlichen Dochten, die Bor und insbesondere Borate enthalten, aufweisen.

Es ist daher die Aufgabe der vorliegenden Erfindung Tränklösungen für Dochte und Dochte, die borfrei sind, bereitzustellen. Gleichzeitig ist es Aufgabe, Dochte mit guten Abbrenneigenschaften und gutem Krümmungsverhalten bereitzustellen.

Die vorliegende Aufgabe wird durch die erfindungsgemäße Tränklösung gemäß Anspruch 1 gelöst. Weiterhin betrifft die vorliegende Erfindung einen borfreien Docht gemäß Anspruch 8. Ebenso betrifft die vorliegende Erfindung Kerzen gemäß Anspruch 12, die den erfindungsgemäßen Docht umfassen.

Ein weiterer Gegenstand der Erfindung betrifft ein Verfahren gemäß Anspruch 14, welches zur Imprägnierung, das heißt Tränkung von Dochten mit einer Tränklösung, eingesetzt wird.

Vorliegend zeigt die Erfindung eine borfreie Tränklösung für einen Docht umfassend,
a) ein Lösungsmittel;
b) wenigstens ein erstes Flammschutzmittel;
c) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat; und
d) wenigstens ein erstes Additiv, wobei das erste Additiv Cernitrat ist.

Tränklösungen werden auch als Präparationslösungen bezeichnet.

Die erfindungsgemäße Tränklösung verzichtet auf den Zusatz von Bor-enthaltenden Substanzen speziell Borate und hier insbesondere Borax. Borate und insbesondere Borax werden auf einer Liste für besonders besorgniserregende Substanzen geführt. Ebenso ist die erfindungsgemäße Tränklösung umweltfreundlich und erlaubt den Verzicht auf einen Gefahrstoff. Zudem ist die Tränklösung teilweise biologisch abbaubar.

Vorzugweise ist das Lösungsmittel der borfreien Tränklösung Wasser.

Weiterhin wird in der erfindungsgemäßen borfreien Tränklösung wenigstens ein erstes Flammschutzmittel eingesetzt. Ein Flammschutzmittel verhindert das Zersetzen des Dochtes. Unter dem Zersetzen wird hierbei das sogenannte Abglühen, das heißt das Verglühen des Dochtes beim Abbrennen der Kerze, verstanden. Das Flammschutzmittel ist gemäß der vorliegenden Erfindung daher unter anderem für das vorteilhafte Abbrennverhalten verantwortlich, wobei gleichzeitig auf gesundheitsgefährdende Bor-enthaltende Substanzen verzichtet werden kann.

Erfindungsgemäße Flammschutzmittel im Sinne der Erfindung sind alle dem Fachmann bekannten Flammschutzmittel, die für die Verwendung in Tränklösungen in Dochten geeignet und borfrei sind.

Vorzugweise wird das wenigstens eine erste Flammschutzmittel ausgewählt aus der Gruppe bestehend aus Phosphaten, organischen Phosphorverbindungen, Stickstoffverbindungen, Kieselsäure und Kombinationen daraus.

Die Phosphate sind vorzugweise ausgewählt aus anorganischen und organischen Phosphaten, bevorzugter aus Dihydrogenphosphaten, Polyphosphaten und/oder Kombinationen daraus, noch bevorzugter aus Ammonium-Dihydrogenphosphat, Ammonium-Polyphosphat und/oder Kombinationen daraus. Besonders bevorzugt ist das wenigstens eine erste Flammschutzmittel ein Polyphosphat und am bevorzugtesten Ammonium-Polyphosphat.

Die organischen Phosphorverbindungen sind vorzugsweise Ammoniumsalze organischer Phosphorverbindungen.

Die Stickstoffverbindungen sind vorzugsweise ausgewählt aus anorganischen Stickstoffverbindungen, organischen Stickstoffverbindungen und/oder Kombinationen daraus, bevorzugt aus anorganischen Stickstoffverbindungen.

Weiterhin umfasst die erfindungsgemäße Tränklösung ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat. Vorzugsweise ist das anorganische Sulfat ausgewählt aus der Gruppe bestehend aus Natriumsulfat, Magnesiumsulfat oder Ammoniumsulfat, bevorzugter ist das anorganische Sulfat Ammoniumsulfat.

Weiterhin umfasst die erfindungsgemäße borfreie Tränklösung Cernitrat als erstes Additiv.

Die Tränklösung kann des weiteren ein Polymer enthalten, welches bevorzugt ein Polyacrylat oder ein vinylbasiertes Polymer ist. Die Polymere können Homo- oder Copolymere sein und können weitere Monomere enthalten, wie zum Beispiel ein oder zweifach ungesättigte Monomere wie Ethylen, Propylen und/oder Butadien.

Gemäß einer weiteren Ausführungsform umfasst die Tränklösung ein zweites Flammschutzmittel, welches aus den vorgenannten Flammschutzmitteln ausgewählt werden kann. Das wenigstens eine erste und das zweite Flammschutzmittel sind in diesem Falle voneinander verschieden.

Vorzugsweise enthält die borfreie Tränklösung ein zweites Additiv, wobei das zweite Additiv Ammoniumnitrat.

Weiterhin bevorzugt enthält die erfindungsgemäße Tränklösung ein weiteres, drittes Additiv. Vorzugsweise ist das dritte Additiv ausgewählt aus der Gruppe bestehend aus Magnesiumhydroxid, Ammoniumhydroxid, Aluminiumhydroxid, Harnstoff, Schwefel, organischen Schwefelverbindungen, anorganischen Schwefelverbindungen und/oder Kombinationen hieraus, bevorzugter ausgewählt aus der Gruppe bestehend aus Schwefel, organischen Schwefelverbindungen und anorganischen Schwefelverbindungen und noch bevorzugter ist das dritte Additiv Schwefel.

Die erfindungsgemäße Tränklösung kann noch weitere Additive enthalten.

Vorzugsweise beträgt der Anteil an anorganischem Sulfat von 0,1 bis 10 Gew.%, bevorzugt von 0,3 bis 9 Gew.%, bevorzugter von 0,3 bis 6,0 Gew.% und noch bevorzugter 0,4 bis 4,0 Gew.% bezogen auf die Gesamtmenge der borfreien Tränklösung.

Weiterhin bevorzugt beträgt der Anteil an erstem Additiv 0,1 bis 4,0 Gew.%, bevorzugter 0,15 bis 3,8 Gew.% und noch bevorzugter 0,2 bis 3,6 Gew.% bezogen auf die Gesamtmenge der Tränklösung.

Ein weiterer Gegenstand der Erfindung betrifft einen borfreien Docht umfassend
a) wenigstens ein erstes Flammschutzmittel;
b) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat; und
c) wenigstens ein erstes Additiv, wobei das erste Additiv Cernitrat ist.

Der Docht besteht aus einem Dochtmaterial. Dieses Dochtmaterial bildet das Basismaterial und wird mit der Tränklösung getränkt. Als Dochtmaterial kommen alle dem Fachmann bekannten Materialien in Betracht. Vorzugweise ist das Dochtmaterial ausgewählt aus Baumwolle, Zellwolle, Zellulosefasern, Papiergarn und/oder Kombinationen daraus.

Vorzugsweise wird der borfreie Docht durch Imprägnieren eines Dochtmaterials mit der erfindungsgemäßen Tränklösung erhalten.

Nach dem Trocknen wird ein borfreier Docht erhalten, der frei von Wasser ist, aber die in der erfindungsgemäßen Tränklösung enthaltenen Substanzen umfasst.

Die oben gemachten Angaben zur erfindungsgemäßen Tränklösung haben entsprechend auch für den borfreien Docht Geltung.

Der borfreie Docht umfasst wenigstens ein erstes Flammschutzmittel. Erfindungsgemäße Flammschutzmittel sind alle dem Fachmann bekannten Flammschutzmittel, die für die Verwendung in Dochten geeignet sind und borfrei sind.

Vorzugweise wird das erste Flammschutzmittel ausgewählt aus der Gruppe bestehend aus Phosphaten, organischen Phosphorverbindungen, Stickstoffverbindungen, Kieselsäure und Kombinationen daraus.

Die Phosphate sind vorzugweise ausgewählt aus anorganischen und organischen Phosphaten, bevorzugter aus Dihydrogenphosphaten, Polyphosphaten und/oder Kombinationen daraus, noch bevorzugter aus Ammonium-Dihydrogenphosphat, Ammonium-Polyphosphat und/oder Kombinationen daraus. Besonders bevorzugt ist das wenigstens eine Flammschutzmittel ein Polyphosphat und am bevorzugtesten Ammonium-Polyphosphat.

Die organischen Phosphorverbindungen sind vorzugsweise Ammoniumsalze organischer Phosphorverbindungen.

Die Stickstoffverbindungen sind vorzugsweise ausgewählt aus anorganischen Stickstoffverbindungen, organischen Stickstoffverbindungen und/oder Kombinationen daraus, bevorzugt aus anorganischen Stickstoffverbindungen. Weiterhin umfasst der erfindungsgemäße Docht ein anorganisches Sulfat, ausgewählt aus der Gruppe bestehend aus Lithiumsulfat, Berylliumsulfat, Natriumsulfat, Ammoniumsulfat, Aluminiumsulfat, Magnesiumsulfat, Kaliumsulfat und Calciumsulfat. Vorzugsweise ist das anorganische Sulfat ausgewählt aus der Gruppe bestehend aus Natriumsulfat, Magnesiumsulfat oder Ammoniumsulfat, bevorzugter ist das anorganische Sulfat Ammoniumsulfat.

Weiterhin umfasst der erfindungsgemäße borfreie Docht wenigstens ein erstes Additiv wobei das erste Additiv Cernitrat ist.

Die Tränklösung kann des weiteren ein Polymer enthalten, wobei das Polymer bevorzugt ein Polyacrylat oder ein vinylbasiertes Polymer ist.

Die Polymere können Homo- oder Copolymere sein und können weitere Monomere enthalten, wie zum Beispiel ein oder zweifach ungesättigte Monomere wie Ethylen, Propylen und/oder Butadien. Gemäß einer weiteren Ausführungsform umfasst der Docht ein zweites Flammschutzmittel, welches aus den vorgenannten Flammschutzmitteln ausgewählt werden kann. Das wenigstens eine erste und das zweite Flammschutzmittel sind in diesem Falle voneinander verschieden.

Vorzugsweise enthält der borfreie Docht ein zweites Additiv, wobei das zweite Additiv ein anorganisches Nitrat ist, bevorzugt ist das zweite Additiv Ammoniumnitrat.

Weiterhin bevorzugt enthält der erfindungsgemäße Docht ein weiteres, drittes Additiv. Vorzugsweise ist das dritte Additiv ausgewählt aus der Gruppe bestehend aus Magnesiumhydroxid, Ammoniumhydroxid, Aluminiumhydroxid, Harnstoff, Schwefel, organischen Schwefelverbindungen, anorganischen Schwefelverbindungen und/oder Kombinationen hieraus, bevorzugter ausgewählt aus der Gruppe bestehend aus Schwefel, organischen Schwefelverbindungen und anorganischen Schwefelverbindungen und noch bevorzugter ist das dritte Additiv Schwefel.

Der erfindungsgemäße Docht kann noch weitere Additive enthalten.

Der erfindungsgemäße Docht kann auch noch ein Dochtwachs umfassen. Das Dochtwachs wird regelmäßig nach dem Imprägnieren und Trocknen außen auf den Docht aufgebracht.

Ein weiterer Gegenstand der Erfindung betrifft eine Kerze, die einen erfindungsgemäßen Docht umfasst.

Die oben gemachten Angaben zur erfindungsgemäßen Tränklösung und dem erfindungsgemäßen Docht haben entsprechend, soweit zutreffend, auch für die erfindungsgemäße Kerze Geltung.

Kerze im Sinne der Erfindung ist ein Kerzenmaterial, welches einen Docht umfasst.

Kerzenmaterialien im Sinne der Erfindung sind Substanzen, die als Hauptbrennmittel in einer Kerze eingesetzt werden. Die Kerzenmaterialien sind ausgewählt aus der Gruppe bestehend aus Paraffin, Stearin tierischer und/oder pflanzlicher Herkunft, Bienenwachs, Palmwachs, Sojawachs, Fette tierischer und/oder pflanzlicher Herkunft, und/oder Kombinationen hieraus. Die erfindungsgemäße Kerze kann somit auch aus verschiedenen Kerzenmaterialien hergestellt sein.

Weiterhin kann die erfindungsgemäße Kerze noch Zusatzstoffe wie Duftstoffe, Farbstoffe und/oder Kombinationen hieraus erhalten.

Die Kerze kann alle dem Fachmann bekannten Formen haben, insbesondere Teelicht, Stumpenkerze oder Stabkerze.

In Abhängigkeit des verwendeten Kerzenmaterials wird der erfindungsgemäße Docht ausgewählt. Die Abbrenneigenschaften und der Krümmungswinkel des Dochtes ergeben sich im Zusammenspiel mit dem jeweils verwendeten Kerzenmaterial.

Ein weiterer Gegenstand der Erfindung betrifft ein Verfahren zur Imprägnierung eines Dochts mit einer Tränklösung umfassend die Schritte
a) Durchführen des Dochtes durch die Tränklösung mit einer Geschwindigkeit von mindestens 100 m/min, bevorzugt mindestens 140 m/min und bevorzugter mindestens 180 m/min, wobei die Verweilzeit des Dochtes in der Tränklösung wenigstens 0,5 Sekunden oder mehr, bevorzugt 0,7 Sekunden oder mehr und bevorzugter 0,8 Sekunden oder mehr beträgt;
b) Aufwickeln des getränkten Dochtes auf eine Trockenvorrichtung, wobei in Schritt a) eine Tränklösung gemäß den Ansprüchen 1 bis 7 eingesetzt wird.

Durch das erfindungsgemäße Verfahren ist es möglich, verschiedenste Dochtmaterialien ausreichend mit einer Tränklösung zu durchtränken.

Das erfindungsgemäße Verfahren erlaubt eine verlängerte Verweilzeit des Dochtes in der Tränklösung. Hierdurch kann die Tränklösung besser in den Docht eindringen und ermöglicht ein besseres Abbrandverhalten. Durch das erfindungsgemäße Verfahren wird der Docht zudem schonender präpariert, das heißt durchtränkt. Weiterhin bevorzugt ist die Durchführgeschwindigkeit in Schritt a) maximal 250 m/min, bevorzugt maximal 225 m/min und bevorzugter maximal 200 m/min. Vorzugsweise ist die Durchführgeschwindigkeit 190 m/min.

Vorzugsweise beträgt die Spannung des Dochtes in Schritt a) 0,1 kg bis 3,0 kg, bevorzugter 0,5 kg bis 2,5 kg und noch bevorzugter 1,0 kg bis 2,0 kg.

Gemäß des Verfahrens wird in Schritt a) die erfindungsgemäße Tränklösung eingesetzt. Die oben gemachten Angaben zur erfindungsgemäßen Tränklösung haben auch für diese bevorzugte Ausführungsform des erfindungsgemäßen Verfahrens Geltung.

Vorzugsweise liegt in Schritt b) die relative Luftfeuchtigkeit zwischen 5 und 25%, bevorzugt zwischen 10 und 20% und bevorzugter zwischen 10 und 15%.

Die Trockendauer in Schritt b) beträgt mindestens 1h, bevorzugt mindestens 1,5h und bevorzugter mindestens 2h.

Vorzugsweise wird im Anschluss an den Trockenschritt c) der Docht gewachst.

Hierdurch wird gewährleistet, dass der Docht bei der Kerzenproduktion in das Kerzenmaterial eingebracht werden kann und dieser beim Anzünden gleich mit Wachs versorgt wird.

Weiterhin kann vor Schritt a) noch ein weiterer Schritt durchgeführt werden. In diesem vorgelagerten Schritt wird der Docht geflochten.

Sofern der Docht nicht direkt im Anschluss an den Trocknungsschritt c) gewachst wird, wird der präparierte und getrocknete Docht im Anschluss an den

Trocknungsschritt c) auf eine Vorrichtung, vorzugsweise eine Papierhülse aufgespult.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

### Ausführungsbeispiele

### Materialien

Ammoniumnitrat, Ammoniumsulfat, Natriumsulfat und Magnesiumsulfat-Heptahydrat wurden von der Firma VWR (Deutschland) bezogen.

Cernitrat wurde von der Firma Thermofisher (Belgien) bezogen.

Exolit AP420 wurde von der Firma Clariant Produkte (Deutschland) GmbH bezogen.

BYK-154 wurde von der Firma Krahn Chemie Deutschland GmbH bezogen.

EUCAM-Textil wurde von der Firma Endotherm Brandschutz (Saarbrücken, Deutschland) bezogen.

### Versuchsdurchführung

Es wurden acht Tränklösungen mit den in Tabelle 1 gezeigten Zusammensetzungen hergestellt. Beispiel 7 zeigt eine Tränklösung welche nicht unter den Schutzumfang der Ansprüche fällt. Alle Tränklösungen sind wässrige Lösungen.

**Tabelle 1: Borfreie Tränklösungen für Dochte**

| **Substanzen** | **1** | **2** | **3** | **4** | **5** | **6** | **7** | **8** |
|---|---|---|---|---|---|---|---|---|
| Wasser | 250,0 g | 250,0 g | 250,0 g | 250,0 g | 250,0 g | 250,0 g | 250,0 g | 250,0 g |
| Exolit AP4202,0 g | 2,0 g | 2,0 g | 2,0 g | 2,0 g | 2,0 g | -- | -- | |
| Amoniumnitrat | 10,0 g | 7,0 g | 1,5 g | 10,0 g | 10,0 g | 10,0 g | -- | -- |
| Amoniumsulfat | 10,0 g | 7,0 g | 1,5 g | 5,0 g | 5,0 g | 7,5 g | -- | -- |
| Cernitrat | 2,0 g | 1,0 g | 0,5 g | 10,0 g | 1,3 g | 1,0 g | -- | 4,1 g |
| EUCAM-Textil | -- | -- | -- | -- | -- | -- | 150,0 g | 312,5 g |
| BYK-154 | -- | -- | -- | -- | -- | -- | 2,0 g | 4,1 g |
| MgS0₄ * 7 H₂O | -- | -- | -- | -- | -- | -- | 2,0 g | 4,1 g |

Das Dochtmaterial wurde für ca. 1 Sekunde in die erfindungsgemäße Tränklösung getaucht und danach manuell abgestreift. Anschließend wurden die Dochte bei Raumklima über Nacht hängend getrocknet.

Dochtwachs wurde auf 90°C erwärmt und, nachdem dieses vollständig aufgeschmolzen war, gerührt. Die Dochte wurden für ca. 2 Sekunden eingelegt bis keine Luftblasen mehr aufstiegen. Überschüssiges Wachs wurde manuell abgestreift.

Die erhaltenen Dochte wurden danach in Kerzenrohlinge eingefädelt und mit Überstand gerade abgeschnitten.

Der Docht, der mit einer Tränklösung gemäß Beispiel 1 präpariert wurde, wurde in einen Teelicht-Kerzenrohling aus Paraffin und einen Teelicht-Kerzenrohling aus einer Paraffin/Palmwachsmischung eingefädelt.

Der Docht, der mit einer Tränklösung gemäß Beispiel 2 präpariert wurde, wurde in einen Teelicht-Kerzenrohling aus Paraffin eingefädelt.

Der Docht, der mit einer Tränklösung gemäß Beispiel 3 präpariert wurde und aus einem ungebleichten Dochtgarn bestand, wurde in einen Teelicht-Kerzenrohling aus Paraffin eingefädelt.

Der Docht, der mit einer Tränklösung gemäß Beispiel 4 präpariert wurde, wurde in einen Duftkerzenrohling aus Paraffin mit 10% Duftanteil eingefädelt.

Der Docht, der mit einer Tränklösung gemäß Beispiel 5 präpariert wurde, wurde in einen Stumpenkerzenrohling aus Paraffin eingefädelt.

Der Docht, der mit einer Tränklösung gemäß Beispiel 6 präpariert wurde, wurde in einen Stumpenkerzenrohling aus Paraffin und in einen Stabkerzenrohling aus Paraffin eingefädelt.

Der Docht, der mit einer Tränklösung gemäß Beispiel 7 präpariert wurde, wurde in einen Stumpenkerzenrohling aus Stearin eingefädelt.

Der Docht, der mit einer Tränklösung gemäß Beispiel 8 präpariert wurde, wurde in einen Stumpenkerzenrohling aus Stearin und in einen Stumpenkerzenrohling mit einer Stearin/Palmwachsmischung eingefädelt.

Mit allen Dochten, die mit erfindungsgemäßen und nicht erfindungsgemäßen Tränklösungen gemäß den Beispielen 1 bis 8 getränkt worden waren, wurden Abbrennversuche durchgeführt.

Für die Brandversuche betrug die Umgebungstemperatur mindestens 15°C und es herrschte kein Luftzug.

Das Abbrennverhalten und die Krümmung des Dochtes wurde 1h nach Anzünden überprüft.

Das Abbrennverhalten aller Dochte war gut. Die Dochte standen gerade aus dem Wachs und hatten eine Krümmung zwischen 45° und 90°.

## Patentansprüche

1. Borfreie Tränklösung für einen Docht umfassend,
a) ein Lösungsmittel;
b) wenigstens ein erstes Flammschutzmittel;
c) ein anorganisches Sulfat, ausgewählt aus der Gruppe bestehend aus Lithiumsulfat, Berylliumsulfat, Natriumsulfat, Ammoniumsulfat, Aluminiumsulfat, Magnesiumsulfat, Kaliumsulfat und Calciumsulfat; und
d) wenigstens ein erstes Additiv, wobei das erste Additiv Cernitrat ist.

2. Borfreie Tränklösung gemäß Anspruch 1 umfassend
ein zweites Additiv, wobei das zweite Additiv ein anorganisches Nitrat ist, bevorzugt ist das zweite Additiv Ammoniumnitrat.

3. Borfreife Tränklösung gemäß Ansprüchen 1 oder 2, wobei das Lösungsmittel Wasser ist.

4. Borfreie Tränklösung gemäß einem der vorhergehenden Ansprüche, wobei das wenigstens eine Flammschutzmittel ein Polyphosphat, bevorzugt Ammonium-Polyphosphat ist.

5. Borfreie Tränklösung gemäß einem der Ansprüche 2 bis 4, wobei das zweite Additiv Ammoniumnitrat ist.

6. Borfreie Tränklösung nach einem der vorhergehenden Ansprüche, wobei der Anteil an anorganischem Sulfat von 0,3 bis 9 Gew.% und bevorzugt 0,4 bis 4,0 Gew.% bezogen auf die Gesamtmenge der Tränklösung beträgt.

7. Borfreie Tränklösung nach einem der vorhergehenden Ansprüche, wobei der Anteil an erstem Additiv 0,1 bis 4,0 Gew.% und bevorzugt 0,2 bis 3,6 Gew.% bezogen auf die Gesamtmenge der Tränklösung beträgt.

8. Borfreier Docht umfassend
a) wenigstens ein erstes Flammschutzmittel;
b) ein anorganisches Sulfat, ausgewählt aus der Gruppe bestehend aus Lithiumsulfat, Berylliumsulfat, Natriumsulfat, Ammoniumsulfat, Magnesiumsulfat, Aluminiumsulfat, Kaliumsulfat und Calciumsulfat; und
c) wenigstens ein erstes Additiv, wobei das erste Additiv Cernitrat ist.

9. Borfreier Docht gemäß Anspruch 8, wobei der Docht aus einem Dochtmaterial besteht und das Dochtmaterial ausgewählt ist aus Baumwolle, Zellwolle, Zellulosefasern, Papiergarn und/oder Kombinationen daraus.

10. Borfreier Docht gemäß den Ansprüchen 8 oder 9, wobei ein zweites Additiv Ammoniumnitrat ist.

11. Borfreier Docht gemäß einem der Ansprüche 8 bis 10, wobei das wenigstens eine Flammschutzmittel Polyphosphat und bevorzugt Ammonium-Polyphosphat ist.

12. Kerze umfassend einen Docht gemäß Ansprüchen 8 bis 11.

13. Kerze gemäß Anspruch 12 wobei die Kerze aus Paraffin, Stearin tierischer und/oder pflanzlicher Herkunft, Bienenwachs, Palmwachs, Sojawachs, Fetten tierischer oder pflanzlicher Herkunft und/oder Kombinationen hieraus, hergestellt ist.

14. Verfahren zur Imprägnierung eines Dochts mit einer Tränklösung umfassend die Schritte
a) Durchführen des Dochtes durch die Tränklösung mit einer Geschwindigkeit von mindestens 100 m/min, bevorzugt 140 m/min und bevorzugter 180 m/min, wobei die Verweilzeit des Dochtes in der Tränklösung wenigstens 0,5 Sekunden oder mehr, bevorzugt 0,7 Sekunden oder mehr und bevorzugter 0,8 Sekunden oder mehr beträgt;
b) Aufwickeln des getränkten Dochtes auf eine Trockenvorrichtung;
wobei in Schritt a) eine Tränklösung gemäß den Ansprüchen 1 bis 7 eingesetzt wird.

15. Verfahren gemäß Anspruch 14, wobei in Schritt b) die relative Luftfeuchtigkeit zwischen 5 und 25%, bevorzugt 10 und 20% und bevorzugter 10 und 15% beträgt.

## Claims

1. Boron-free impregnation solution for a wick comprising,
a) a solvent;
b) at least one first flame retardant;
c) an inorganic sulfate selected from the group consisting of lithium sulfate, beryllium sulfate, sodium sulfate, ammonium sulfate, aluminium sulfate, magnesium sulfate, potassium sulfate, and calcium sulfate; and
d) at least one first additive, wherein the first additive is cerium nitrate.

2. Boron-free impregnation solution according to Claim 1 comprising
a second additive, wherein the second additive is an inorganic nitrate, preferably the second additive is ammonium nitrate.

3. Boron-free impregnation solution according to Claims 1 or 2, wherein the solvent is water.

4. Boron-free impregnation solution according to any one of the preceding claims, wherein the at least one flame retardant is a polyphosphate, preferably ammonium polyphosphate.

5. Boron-free impregnation solution according to any one of Claims 2 to 4, wherein the second additive is ammonium nitrate.

6. Boron-free impregnation solution according to any one of the preceding claims, wherein the proportion of inorganic sulfate is from 0.3 to 9% by weight and preferably 0.4 to 4.0% by weight, in relation to the total amount of the impregnation solution.

7. Boron-free impregnation solution according to any one of the preceding claims, wherein the proportion of the first additive is 0.1 to 4.0% by weight and preferably 0.2 to 3.6% by weight, in relation to the total amount of the impregnation solution.

8. Boron-free wick comprising
a) at least one first flame retardant;
b) an inorganic sulfate selected from the group consisting of lithium sulfate, beryllium sulfate, sodium sulfate, ammonium sulfate, magnesium sulfate, aluminium sulfate, potassium sulfate, and calcium sulfate; and
c) at least one first additive, wherein the first additive is cerium nitrate.

9. Boron-free wick according to Claim 8, wherein the wick consists of a wick material and the wick material is selected from cotton, rayon staple, cellulose fibres, paper yarn, and/or combinations thereof.

10. Boron-free wick according to Claims 8 or 9, wherein a second additive is ammonium nitrate.

11. Boron-free wick according to any one of Claims 8 to 10, wherein the at least one flame retardant is polyphosphate and preferably ammonium polyphosphate.

12. Candle comprising a wick according to Claims 8 to 11.

13. Candle according to Claim 12, wherein the candle is produced from paraffin, stearin of animal and/or vegetable origin, beeswax, palm wax, soy wax, fats of animal or vegetable origin, and/or combinations thereof.

14. Method for impregnating a wick using an impregnation solution comprising the following steps
a) passing the wick through the impregnation solution at a speed of at least 100m/min, preferably 140m/min, and more preferably 180m/min, wherein the dwell time of the wick in the impregnation solution is at least 0.5 seconds or more, preferably 0.7 seconds or more, and more preferably 0.8 seconds or more;
b) winding the impregnated wick onto a drying device;
wherein in step a) an impregnation solution according to Claims 1 to 7 is used.

15. Method according to Claim 14, wherein in step b) the relative humidity is between 5 and 25%, preferably 10 and 20%, and more preferably 10 and 15%.

## Revendications

1. Solution d'imprégnation exempte de bore pour une mèche, comprenant,
a) un solvant ;
b) au moins un premier retardateur de flamme ;
c) un sulfate inorganique, choisi dans le groupe composé de sulfate de lithium, sulfate de béryllium, sulfate de sodium, sulfate d'ammonium, sulfate d'aluminium, sulfate de magnésium, sulfate de potassium et sulfate de calcium ; et
d) au moins un premier additif, dans laquelle le premier additif est le nitrate de cérium.

2. Solution d'imprégnation exempte de bore selon la revendication 1, comprenant
un second additif, dans laquelle le second additif est un nitrate inorganique, le second additif est de préférence le nitrate d'ammonium.

3. Solution d'imprégnation exempte de bore selon les revendications 1 ou 2, dans laquelle le solvant est l'eau.

4. Solution d'imprégnation exempte de bore selon l'une des revendications précédentes, dans laquelle l'au moins un retardateur de flamme est un polyphosphate, de préférence le polyphosphate d'ammonium.

5. Solution d'imprégnation exempte de bore selon l'une des revendications 2 à 4, dans laquelle le second additif est le nitrate d'ammonium.

6. Solution d'imprégnation exempte de bore selon l'une des revendications précédentes, dans laquelle la proportion de sulfate inorganique est de 0,3 à 9 % en poids et de préférence de 0,4 à 4,0 % en poids par rapport à la quantité totale de la solution d'imprégnation.

7. Solution d'imprégnation exempte de bore selon l'une des revendications précédentes, dans laquelle la proportion de premier additif est de 0,1 à 4,0 % en poids et de préférence de 0,2 à 3, 6 % en poids par rapport à la quantité totale de la solution d'imprégnation.

8. Mèche exempte de bore, comprenant
a) au moins un premier retardateur de flamme ;
b) un sulfate inorganique, choisi dans le groupe composé de sulfate de lithium, sulfate de béryllium, sulfate de sodium, sulfate d'ammonium, sulfate de magnésium, sulfate d'aluminium, sulfate de potassium et sulfate de calcium ; et
c) au moins un premier additif, dans laquelle le premier additif est le nitrate de cérium.

9. Mèche exempte de bore selon la revendication 8, dans laquelle la mèche est constituée d'un matériau de mèche et le matériau de mèche est choisi parmi le coton, la viscose, les fibres de cellulose, le fil de papier et/ou leurs combinaisons.

10. Mèche exempte de bore selon les revendications 8 ou 9, dans laquelle un second additif est le nitrate d'ammonium.

11. Mèche exempte de bore selon l'une des revendications 8 à 10, dans laquelle l'au moins un retardateur de flamme est du polyphosphate et de préférence le polyphosphate d'ammonium.

12. Bougie comprenant une mèche selon les revendications 8 à 11.

13. Bougie selon la revendication 12, dans laquelle la bougie est fabriquée en paraffine, en stéarine animale et/ou d'origine végétale, en cire d'abeille, en cire de palmier, en cire de soja, en graisses d'origine animale ou végétale et/ou leurs combinaisons.

14. Procédé d'imprégnation d'une mèche au moyen d'une solution d'imprégnation, comprenant les étapes suivantes
a) faire passer la mèche dans la solution d'imprégnation à une vitesse d'au moins 100 m/min, de préférence 140 m/min et de manière davantage préférée 180 m/min, dans lequel le temps de séjour de la mèche dans la solution d'imprégnation est d'au moins 0,5 seconde ou plus, de préférence 0,7 seconde ou plus, et de manière davantage préférée 0,8 seconde ou plus ;
b) enrouler la mèche imbibée sur un dispositif de séchage ; dans lequel, à l'étape a), une solution d'imprégnation selon les revendications 1 à 7 est utilisée.

15. Procédé selon la revendication 14, dans lequel, à l'étape b) , l'humidité relative est entre 5 et 25 %, de préférence 10 et 20 % et de manière davantage préférée 10 et 15 %.
